# EUROPEAN PATENT APPLICATION

(11) **EP 1 702 674 A1**
(43) Date of publication of application: **20.09.2006**
(21) Application number: 05005684.5
(22) Date of filing: 16.03.2005
(51) Int. Cl.: B01J 13/02

(54) **Visible beads**

(71) Applicant: Cognis IP Management GmbH, 40589 Düsseldorf (DE)
(72) Inventor: Viladot Petit, Josep-Lluis, ES-08018 Barcelona (ES); Grisoni, Philippe, F-54420 Saulxures les Nancy (FR); Rathjens, Andreas Dr., F-54425 Pulnoy (FR)
(74) Representative: Fabry, Bernd

(57) **Abstract**

Suggested are visible beads with average diameters in the range from 0.1 to 5 mm, obtainable by
(a) processing aqueous active ingredient preparations with oil bodies in the presence of emulsifiers and optionally gelling agents to give O/W emulsions,
(b) treating the resulting emulsions with aqueous solutions of anionic polymers,
(c) bringing the resulting matrix into contact with aqueous solutions of oligochitosan having an average molecular weight of less than 5,000 Dalton, and
(d) separating off the resulting encapsulation products from the aqueous phase.

## Description

### Object of the invention

The invention is in the field of encapsulation of active ingredients and relates to novel visible beads, to a process for their preparation, and to their use in the field of cosmetics, detergents, pharmacy, and food additives.

### State of the art

The term "visible bead" describes spherical aggregates with a diameter in the range from about 0.1 to about 5 mm which comprise at least one solid or liquid core that is surrounded by at least one continuous shell. More precisely, they are finely dispersed liquid or solid phases surrounded by film-forming polymers, during the preparation of which the polymers, following emulsification and coacervation or interfacial polymerisation, are deposited onto the material to be enclosed. In another process, liquid active ingredients are taken up in a matrix ("microsponge") which, as microparticles, may additionally be coated with film-forming polymers. The microscopically small capsules, also called micro- or nanocapsules, can be dried like powders. Besides single-core microcapsules, also multicore aggregates called microspheres, are known which contain two or more cores that are distributed in the continuous shell material. Single- or multicore microcapsules can additionally be surrounded by an additional second, third, etc. shell. The shell can consist of natural, semi-synthetic or synthetic materials. Natural shell materials are, for example, gum arabic, agar agar, agarose, maltodextrins, alginic acid and its salts, e.g., sodium alginate or calcium alginate, fats and fatty acids, cetyl alcohol, collagen, chitosan, lecithins, gelatin, albumin, shellac, polysaccharides, such as starch or dextran, polypeptides, protein hydrolyzates, sucrose and waxes. Semi-synthetic shell materials are, inter alia, chemically modified celluloses, in particular cellulose esters and ethers, e.g., cellulose acetate, ethyl cellulose, hydroxypropyl cellulose, hydroxypropylmethyl cellulose and carboxymethyl cellulose, and starch derivatives, in particular starch ethers and esters. Synthetic shell materials are, for example, polymers, such as polyacrylates, polyamides, polyvinyl alcohol or polyvinylpyrrolidone. Examples of microcapsules of the prior art are the following commercial products (the shell material is given in brackets in each case): Hallcrest Microcapsules (gelatin, gum arabic), Coletica Thalaspheres (maritime collagen), Lipotec Millicapseln (alginic acid, agar agar), Induchem Unispheres (lactose, microcrystalline cellulose, hydroxypropylmethyl cellulose); Unicerin C30 (lactose, microcrystalline cellulose, hydroxypropylmethyl cellulose), Kobo Glycospheres (modified starch, fatty acid esters, phospholipids), Softspheres (modified agar agar) and Kuhs Probiol Nanospheres (phospholipids).

In this connection, reference may be made to the German patent application DE 19712978 A1 (Henkel), which discloses chitosan microspheres obtained by mixing chitosans or chitosan derivatives with oil bodies and introducing these mixtures into surfactant solutions which have been made alkaline. German patent application DE 19756452 A1 (Henkel) also discloses the use of chitosan as encapsulation material for tocopherol.

The active ingredients are usually released from the microcapsules during application of the preparations comprising them by destruction of the shell as a result of mechanical, thermal, chemical or enzymatic action. For example, WO 01/066240 A1 (Primacare) discloses microcapsules having an average diameter from 0.1 to 5 mm which are obtained from an O/W emulsion, comprising actives, oil bodies and polymers which is brought into contact with an aqueous solution of a high-molecular chitosan to form a shell. The beads thus obtained, however, suffer from a serious disadvantage, since for quite a number of technical applications, especially if applied on fibres, they are weak which leads to the effect that the active ingredient is not released over a longer period, but is set free at once and at a very early time. In addition, the handling of high molecular aqueous chitosan solutions is often difficult due to their tendency to form viscous pastes or gels.

Therefore, the problem underlying the present invention was to improve the process as set out in WO 01/066240 and to develop new visible beads which are more resistant against mechanical pressure and therefore survive, for example, under the conditions of machine washing over a longer period.

### Description of the invention

The present invention claims visible beads with average diameters in the range from 0.1 to 5 mm, obtainable by
(a) processing aqueous active ingredient preparations with oil bodies in the presence of emulsifiers and optionally gelling agents to give O/W emulsions,
(b) treating the resulting emulsions with aqueous solutions of anionic polymers,
(c) bringing the resulting matrix into contact with aqueous solutions of oligochitosan having an average molecular weight of less than 5,000 Dalton, and
(d) separating off the resulting encapsulation products from the aqueous phase.

To the applicant's surprise, it was discovered that the low molecular oligochitosans are able to diffuse the beads during the formation of the shell, thus allowing a structure that contains glucosamine residues both inside the matrix and the membrane. A matrix thus obtained, comprising the oil bodies, emulsifiers, anionic polymers and optionally gelling agents in combination with glucosamine residues, has been found to be rather stable. In contrast, if high molecular weight versions are applied, the chitosan is not able to diffuse inside and is present only in the membrane thus having a weaker structure. Therefore, the present invention using oligochitosan also provides a method to incorporate more glucosamine residues in a capsule, compared to conventional processes that deal with high molecular chitosan.

In addition, the low viscosity of the oligochitosan solutions allows dropping of the aqueous solution of the anionic polymers directly into a concentrated solution while using high molecular chitosans. The low viscosity of the oligochitosan solution also allows an alternative way of processing: Instead of placing the oligochitosan in the bath into which the matrix, comprising the actives, the oil bodies and the anionic polymers is dropped, it can be mixed with the said matrix. In order to avoid interactions between the cationic and anionic polymers, the pH has to be set above 7, or even above 7.5; in that case the bath can be merely a glycolic acid solution.

Finally, since oligochitosan shows anti-inflammatory activity, the beads according to the present invention exhibit an additional advantage over the capsules known from the state of the art, which has been found rather useful, especially in the treatment of textiles.

The invention further provides a process for the preparation of visible beads with average diameters in the range from 0.1 to 5 mm in which
(a) aqueous active ingredient preparations are processed with oil bodies in the presence of emulsifiers and optionally gelling agents to give O/W emulsions,
(b) the resulting emulsions are treated with aqueous solutions of anionic polymers,
(c) the resulting matrix is brought into contact with aqueous solutions of oligochitosan having an average molecular weight of less than 5,000 Dalton and
(d) resulting encapsulation products are separated off from the aqueous phase.

### Active Ingredients

Per se, the choice of active ingredients to be encapsulated is unimportant. They should be water- or oil-soluble substances which may be chosen, for example, from the group of fats and waxes, pearlescent waxes, lecithins, phospholipids, biogenic active ingredients, UV light protection factors, antioxidants, deodorants, antiperspirants, antidandruff agents, film formers, insect repellents, self-tanning agents, tyrosine inhibitors, perfume oils, dyes and the like.

### • Fats and oils

Typical examples of fats and waxes are glycerides, i.e., solid or liquid vegetable or animal products which essentially consist of mixed glycerol esters of higher fatty acids. Suitable waxes are, inter alia, natural waxes, such as, for example, candelilla wax, carnauba wax, japan wax, espartograss wax, cork wax, guaruma wax, ricegerm oil wax, sugarcane wax, ouricury wax, montan wax, beeswax, shellac wax, spermaceti, lanolin (wool wax), uropygial grease, cerasin, ozokerite (earth wax), petrolatum, paraffin waxes, microcrystalline waxes; chemically modified waxes (hard waxes), such as, for example, montan ester waxes, sasol waxes, hydrogenated jojoba waxes, and synthetic waxes, such as, for example, polyalkylene waxes and polyethylene glycol waxes. In addition to the fats, suitable additives are also fat-like substances, such as lecithins and phospholipids. The person skilled in the art understands by the term lecithins the glycerophospholipids which form from fatty acids, glycerol, phosphoric acid and choline by esterification. Thus, lecithins are also often referred to as phosphatidylcholines (PC) in the specialist field. Examples of natural lecithins, which may be mentioned are cephalins, are also referred to as phosphatidic acids and are derivatives of 1,2-diacyl-sn-glycerol-3-phosphoric acids. By contrast, phospholipids usually describe mono- and, preferably, diesters of phosphoric acid with glycerol (glycerol phosphates), which are generally considered to be fats. In addition, sphingosines and sphingolipids are also suitable.

### • Pearlescent waxes

Examples of suitable pearlescent waxes are: alkylene glycol esters, specifically ethylene glycol distearate; fatty acid alkanolamides, specifically coconut fatty acid diethanolamide; partial glycerides, specifically stearic acid monoglyceride; esters of polybasic, optionally hydroxy-substituted carboxylic acids with fatty alcohols having 6 to 22 carbon atoms, specifically long-chain esters of tartaric acid; fatty substances, such as, for example, fatty alcohols, fatty ketones, fatty aldehydes, fatty ethers and fatty carbonates which have a total of at least 24 carbon atoms, specifically laurone and distearyl ether; fatty acids, such as stearic acid, hydroxystearic acid or behenic acid, ring-opening products of olefin epoxides having 12 to 22 carbon atoms with fatty alcohols having 12 to 22 carbon atoms and/or polyols having 2 to 15 carbon atoms and 2 to 10 hydroxyl groups, and mixtures thereof.

### • Primary light protection factors

UV light protection factors mean, for example, organic substances (light protection filters) which are liquid or crystalline at room temperature, and which are able to absorb ultraviolet rays and give off the absorbed energy again in the form of longer-wave radiation, e.g., heat. UVB filters may be oil-soluble or water- soluble. Examples of oil-soluble substances are:
o 3-benzylidenecamphor or 3-benzylidenenorcamphor and derivatives thereof, e.g. 3-(4-methylbenzylidene)-camphor, as described in EP 0693471 Bi;
o 4-amino- benzoic acid derivatives, preferably 2-ethylhexyl 4-(dimethylamino) benzoate, 2-octyl 4-(dimethylamino)-benzoate and amyl 4-(dimethylamino) benzoate;
o esters of cinnamic acid, preferably 2-ethylhexyl 4-methoxycinnamate, propyl 4-methoxycinnamate, isoamyl 4-methoxycinnamate 2-ethylhexyl 2-cyano-3,3-phenylcinnamate (octocrylene);
o esters of salicylic acid, preferably 2-ethylhexyl salicylate, 4-isopropylbenzyl salicylate, homomenthyl salicylate;
o derivatives of benzophenone, preferably 2-hydroxy- 4-methoxybenzophenone, 2-hydroxy-4-methoxy-4'-methyl-benzophenone, 2,2'-dihydroxy-4-methoxybenzophenone;
o esters of benzalmalonic acid, preferably di-2-ethyl-hexyl 4-methoxybenzmalonate;
o triazine derivatives, such as, for example, 2,4,6-trianilino(p-carbo-2'-ethyl-1'-hexyloxy)-1,3,5-triazine and Octyl Triazone, as described in EP 0818450 A1 or dioctylbutamido-triazone (Uvasorb® HEB);
o propane-1,3-diones, such as, for example, 1-(4-tert-butylphenyl)-3-(4'methoxyphenyl)propane-1,3-dione;
o ketotricyclo(5.2.1.0)decane derivatives, as described in EP 0694521 B1.

Suitable water-soluble substances are:
o 2-phenyl-benzimidazole-5-sulfonic acid and the alkali metal, alkaline earth metal, ammonium, alkylammonium, alkanolammonium and glucammonium salts thereof;
o sulfonic acid derivatives of benzophenones, preferably 2-hydroxy-4- methoxybenzophenone-5-sulfonic acid and its salts;
o sulfonic acid derivatives of 3-benzylidenecamphor, such as, for example, 4-(2-oxo-3-bomylidenemethyl) benzenesulfonic acid and 2-methyl-5-(2-oxo-3-bornylidene)sulfonic acid and salts thereof.

Suitable typical UV-A filters are, in particular, derivatives of benzoylmethane, such as, for example, 1-(4'-tert-butylphenyl)-3-(4'-methoxyphenyl)propane-1,3-dione, 4-tert-butyl-4'-methoxydibenzoylmethane (Parsol 1789), 1-phenyl-3-(4'-isopropylphenyl)propane-1,3-dione, and enamine compounds as described in DE 19712033 A1 (BASF). The UV-A and UV-B filters can certainly also be used in mixtures. Particularly favourable combinations consist of the derivatives of benzoylmethane, e.g., 4-tert-butyl-4'-methoxy-dibenzoyl-methane (Parsol® 1789) and 2-ethylhexyl 2-cyano-3,3-phenylcinnamate (octocrylene) in combination with esters of cinnamic acid, preferably 2-ethylhexyl 4-methoxycinnamate and/or propyl 4-methoxycinnamate and/or isoamyl 4-methoxycinnamate. Combinations with water-soluble filters, such as, for example, 2-phenylbenzimidazole-5-sulfonic acid and the alkali metal, alkaline earth metal, ammonium, alkylammonium, alkanolammonium and glucammonium salts thereof, are advantageously combined.

In addition to said soluble substances, insoluble light protection pigments, namely finely dispersed metal oxides or salts, are also suitable for this purpose. Examples of suitable metal oxides are, in particular, zinc oxide and titanium dioxide and also oxides of iron, zirconium, silicon, manganese, aluminium and cerium, and mixtures thereof. Salts which may be used are silicates (talc), barium sulfate or zinc stearate. The oxides and salts are used in the form of pigments for skincare, skin-protective emulsions, and decorative cosmetics. The particles here should have an average diameter of less than 100 nm, preferably between 5 and 50 nm, and in particular between 15 and 30 nm. They may have a spherical shape, but it is also possible to use particles which have an ellipsoidal shape or a shape deviating in some other way from the spherical form. The pigments can also be surface- treated, i.e., hydrophilicized or hydrophobicized. Typical examples are coated titanium dioxides, such as, for example, titanium dioxide T 805 (Degussa) or Eusolex® T2000 (Merck). Suitable hydrophobic coating agents here are primarily silicones and, specifically in this case, trialkoxyoctylsilanes or simethicones. In sunscreens, preference is given to using micropigments or nanopigments. Preference is also given to using micronized zinc oxide. Further suitable UV light protection filters are given in the review by P. Finkel in SÖFW-Journal 122, 543 (1996) and Parf. Kosm. 3, 11 (1999).

### • Secondary light protection factors

Besides the two above-mentioned groups of primary light protection substances, it is also possible to encapsulate secondary light protection agents of the antioxidant type; these interrupt the photochemical reaction chain which is triggered when UV radiation penetrates the skin. Typical examples thereof are amino acids (e.g. glycine, histidine, tyrosine, tryptophan) and derivatives thereof, imidazoles (e.g. urocanic acid) and derivatives thereof, peptides, such as D,L-carnosine, D-carnosine, L-carnosine and derivatives thereof (e.g. anserine), carotenoids, carotenes (e.g. α-carotene, β-carotene, lycopene) and derivatives thereof, chlorogenic acid and derivatives thereof, lipoic acid and derivatives thereof (e.g. dihydrolipoic acid), aurothioglucose, propyl-thiouracil and other thiols (e.g. thioredoxin, glutathione, cysteine, cystine, cystamine and the glycosyl, N-acetyl, methyl, ethyl, propyl, amyl, butyl and lauryl, palmitoyl, oleyl, γ- linoleyl, cholesteryl and glyceryl esters thereof), and salts thereof, dilauryl thiodipropionate, distearyl thiodipropionate, thiodipropionic acid and derivatives thereof (esters, ethers, peptides, lipids, nucleotides, nucleosides and salts), and sulfoximine compounds (e.g. buthionine sulfoximines, homocysteine sulfoximine, butionine sulfones, penta-, hexa-, heptathionine sulfoximine) in very low tolerated doses (e. g. pmol to µmol/kg), and also (metal) chelating agents (e.g. α- hydroxy fatty acids, palmitic acid, phytic acid, lactoferrin), α- hydroxy acids (e.g. citric acid, lactic acid, malic acid), humic acid, bile acid, bile extracts, bilirubin, biliverdin, EDTA, EGTA and derivatives thereof, unsaturated fatty acids and derivatives thereof (e.g. γ-linolenic acid, linoleic acid, oleic acid), folic acid and derivatives thereof, ubiquinone and ubiquinol and derivatives thereof, vitamin C and derivatives (e.g. ascorbyl palmitate, Mg ascorbyl phosphate, ascorbyl acetate), tocopherols and derivatives (e.g. vitamin E acetate), vitamin A and derivatives (vitamin A palmitate), and coniferyl benzoate of benzoin resin, rutic acid and derivatives thereof, α-glycosylrutin, ferulic acid, furfurylideneglucitol, carnosine, butylhydroxytoluene, butylhydroxyanisole, nordihydroguaiacic acid, nordihy-droguaiaretic acid, trihydroxybutyrophenone, uric acid and derivatives thereof, mannose and derivatives thereof, superoxide dismutase, zinc and derivatives thereof (e.g. ZnO, ZnSO₄) selenium and derivatives thereof (e.g. selenomethionine), stilbenes and derivatives thereof (e.g. stilbene oxide, trans-stilbene oxide) and the derivatives (salts, esters, ethers, sugars, nucleotides, nucleosides, peptides and lipids) of said active ingredients which are suitable according to the invention.

### • Biogenic active agents

Biogenic active ingredients are, for example, describing tocopherol, tocopherol acetate, tocopherol palmitate, ascorbic acid, (deoxy)ribonucleic acid and fragmentation products thereof, retinol, bisabolol, allantoin, phytantriol, panthenol, AHA acids, amino acids, ceramides, pseudoceramides, essential oils, plant extracts and vitamin complexes.

### • Anti-microbial agents

Suitable anti-microbial agents are, in principle, all substances effective against Gram-positive bacteria, such as, for example, 4- hydroxybenzoic acid and its salts and esters, N-(4-chlorophenyl)-N'-(3,4- dichlorophenyl)urea, 2,4,4'-trichloro-2'-hydroxy-diphenyl ether (triclosan), 4-chloro-3,5-dimethyl-phenol, 2,2'-methylenebis(6-bromo-4- chlorophenol), 3-methyl-4-(1-methylethyl)phenol, 2-benzyl-4-chloro-phenol, 3-(4-chlorophenoxy)-1,2-propanediol, 3-iodo-2-propynyl butylcarbamate, chlorhexidine, 3,4,4'-trichlorocarbanilide (TTC), antibacterial fragrances, thymol, thyme oil, eugenol, oil of cloves, menthol, mint oil, farnesol, phenoxyethanol, glycerol monocaprate, glycerol monocaprylate, glycerol monolaurate (GML), diglycerol monocaprate (DMC), salicylic acid N-alkylamides, such as, for example, n-octylsalicylamide or n- decylsalicylamide.

### • Enzyme inhibitors

Suitable enzyme inhibitors are, for example, esterase inhibitors. These are preferably trialkyl citrates, such as trimethyl citrate, tripropyl citrate, triisopropyl citrate, tributyl citrate and, in particular, triethyl citrate (Hydagen CAT). The substances inhibit enzyme activity, thereby reducing the formation of odour. Other substances which are suitable esterase inhibitors are sterol sulfates or phosphates, such as, for example, lanosterol, cholesterol, campesterol, stigmasterol and sitosterol sulfate or phosphate, dicarboxylic acids and esters thereof, such as, for example, glutaric acid, monoethyl glutarate, diethyl glutarate, adipic acid, monoethyl adipate, diethyl adipate, malonic acid and diethyl malonate, hydroxycarboxylic acids and esters thereof, such as, for example, citric acid, malic acid, tartaric acid or diethyl tartrate, and zinc glycinate.

### • Odour absorbers

Suitable odour absorbers are substances which are able to absorb and largely retain odour-forming compounds. They lower the partial pressure of the individual components, thus also reducing their rate of diffusion. It is important that perfumes must remain unimpaired in this process. Odour absorbers are not effective against bacteria. They comprise, for example, as main constituent, a complex zinc salt of ricinoleic acid or specific, largely odour-neutral fragrances which are known to the person skilled in the art as "fixatives", such as, for example, extracts of labdanum or styrax or certain abietic acid derivatives. The odour masking agents are fragrances or perfume oils, which, in addition to their function as odour masking agents, give the deodorants their respective fragrance note. Perfume oils which may be mentioned are, for example, mixtures of natural and synthetic fragrances. Natural fragrances are extracts from flowers, stems and leaves, fruits, fruit peels, roots, woods, herbs and grasses, needles and branches, and resins and balsams. Also suitable are animal products, such as, for example, civet and castoreum. Typical synthetic fragrance compounds are products of the ester, ether, aldehyde, ketone, alcohol, and hydrocarbon type. Fragrance compounds of the ester type are, for example, benzyl acetate, p-tert-butylcyclohexyl acetate, linalyl acetate, phenylethyl acetate, linalyl benzoate, benzyl formate, allyl cyclohexylpropionate, styrallyl propionate and benzyl salicylate. The ethers include, for example, benzyl ethyl ether, and the aldehydes include, for example, the linear alkanals having 8 to 18 carbon atoms, citral, citronellal, citronellyloxyacetaldehyde, cyclamen aldehyde, hydroxycitronellal, lilial and bourgeonal, the ketones include, for example, the ionones and methyl cedryl ketone, the alcohols include anethole, citronellol, eugenol, isoeugenol, geraniol, linaool, phenylethyl alcohol and terpineol, and the hydrocarbons include mainly the terpenes and balsams. Preference is, however, given to using mixtures of different fragrances which together produce a pleasing fragrance note. Essential oils of relatively low volatility, which are mostly used as aroma components, are also suitable as perfume oils, e.g. sage oil, camomile oil, oil of cloves, melissa oil, mint oil, cinnamon leaf oil, linden flower oil, juniperberry oil, vetiver oil, olibanum oil, galbanum oil, labdanum oil and lavandin oil. Preference is given to using bergamot oil, dihydromyrcenol, lilial, lyral, citronellol, phenylethyl alcohol, α-hexylcinnamaldehyde, geraniol, benzylacetone, cyclamen aldehyde, linalool, boisambrene forte, ambroxan, indole, hedione, sandelice, lemon oil, mandarin oil, orange oil, allyl amyl glycolate, cyclovertal, lavandin oil, clary sage oil, β- damascone, geranium oil bourbon, cyclohexyl salicylate, Vertofix coeur, iso-E-super, Fixolide NP, evernyl, iraldein gamma, phenylacetic acid, geranyl acetate, benzyl acetate, rose oxide, romilat, irotyl and floramat alone or in mixtures.

### • Antiperspirant active ingredients

Suitable astringent antiperspirant active ingredients are primarily salts of aluminium, zirconium or of zinc. Such suitable antihydrotic active ingredients are, for example, aluminium chloride, aluminium chlorohydrate, aluminium dichlorohydrate, aluminium sesquichlorohydrate and complex compounds thereof, e.g. with 1,2- propylene glycol, aluminium hydroxyallantoinate, aluminium chloride tartrate, aluminium zirconium trichlorohydrate, aluminium zirconium tetrachlorohydrate, aluminium zirconium pentachlorohydrate and complex compounds thereof, e.g. with amino acids, such as glycine.

### • Antidandruff active ingredients

Suitable antidandruff active agents are Piroctone Olamine (1- hydroxy-4-methyl-6-(2,4,4-trimythyl-pentyl)-2-(1H)-pyridone monoethanolamine salt), Baypival® (climbazole), Ketoconazol®, (4-acetyl-1- {4-[2-(2,4-dichlorophenyl) r-2-(1H-imidazol-1-ylmethyl)-1,3-dioxylan-c-4- ylmethoxyphenyl}piperazine, ketoconazole, elubiol, selenium disulfide, colloidal sulfur, sulfur polyethylene glycol sorbitan monoleate, sulfur ricinol polyethoxylate, sulfur tar distillates, salicylic acid (or in combination with hexachlorophene), undexylenic acid monoethanolamidesulfosuccinate Na salt, Lamepon® UD (protein-undecylenic acid condensate), zinc pyrithione, aluminum pyrithione and magnesium pyrithione/dipyrithione magnesium sulfate.

### • Insect repellents

Suitable insect repellents are N,N-diethyl-m-toluamide, 1,2- pentanediol or ethyl butylacetylaminopropionate. A suitable self-tanning agent is dihydroxyacetone. Suitable tyrosine inhibitors, which prevent the formation of melanin and are used in depigmentation agents, are, for example, arbutin, ferulic acid, kojic acid, coumaric acid and ascorbic acid (vitamin C).

### • Perfume oils

Perfume oils which can be encapsulated and which may be mentioned are: mixtures of natural and synthetic fragrances. Natural fragrances are extracts from flowers (lily, lavender, rose, jasmine, neroli, ylang-ylang), stems and leaves (geranium, patchouli, petitgrain), fruits (aniseed, coriander, cumin, juniper), fruit peels (bergamot, lemon, orange), roots (mace, angelica, celery, cardamom, costus, iris, calmus), woods (pine wood, sandalwood, guaiac wood, cedarwood, rosewood), herbs and grasses (tarragon, lemon grass, sage, thyme), needles and branches (spruce, fir, pine, dwarf-pine), resins and balsams (galbanum, elemi, benzoin, myrrh, olibanum, opoponax). Also suitable are animal raw materials, such as, for example, civet and castoreum. Typical synthetic fragrance compounds are products of the ester, ether, aldehyde, ketone, alcohol, and hydrocarbon type. Fragrance compounds of the ester type are, for example, benzyl acetate, phenoxyethyl isobutyrate, p-tert- butylcyclohexyl acetate, linalyl acetate, dimethylbenzylcarbinyl acetate, phenylethyl acetate, linalyl benzoate, benzyl formate, ethyl-methylphenyl glycinate, allyl cyclohexylpropionate, styrallyl propionate and benzyl salicylate. The ethers include, for example, benzyl ethyl ether, the aldehydes include, for example, the linear alkanals having 8 to 18 carbon atoms, citral, citronellal, citronellyloxyacetaldehyde, cyclamen aldehyde, hydroxycitronellal, lilial and bourgeonal, and the ketones include, for example, the ionones, α-isomethylionone and methyl cedryl ketone, the alcohols include anethole, citronellol, eugenol, isoeugenol, geraniol, linalool, phenylethyl alcohol and terpineol, and the hydrocarbons include predominantly the terpenes and balsams. Preference is, however, given to using mixtures of different fragrances which together produce a pleasing fragrance note. Essential oils of relatively low volatility, which are mostly used as aroma components, are also suitable as perfume oils, e.g., sage oil, camomile oil, oil of cloves, melissa oil, mint oil, cinnamon leaf oil, linden blossom oil, juniperberry oil, vetiver oil, olibanum oil, galbanum oil, labolanum oil and lavandin oil. Preference is given to using bergamot oil, dihydromyrcenol, lilial, lyral, citronellol, phenylethyl alcohol, α-hexylcinnamaldehyde, geraniol, benzylacetone, cyclamen aldehyde, linalool, boisambrene forte, ambroxan, indole, hedione, sandelice, lemon oil, mandarin oil, orange oil, allyl amyl glycolate, cyclovertal, lavandin oil, clary sage oil, β-damascone, geranium oil bourbon, cyclohexyl salicylate, Vertofix coeur, iso-E-Super, Fixolide NP, evernyl, iraldein gamma, phenylacetic acid, geranyl acetate, benzyl acetate, rose oxide, romilat, irotyl and floramat alone or in mixtures.

### • Dyes

Finally, dyes that can be used are the substances which are approved and suitable for cosmetic purposes. They are listed, for example, in the publication "Kosmetische Färbemittel" [Cosmetics Colorants] from the Farbstoffkommission der Deutschen Forschungsgemeinschaft [Dyes Commission of the German Research Council], Verlag Chemie, Weinheim, 1984, pp. 81-106.

All said active ingredients are used, calculated on the beads, usually in concentrations from 0.001 to 10% by weight, preferably 0.5 to 5% by weight, and in particular 1 to 2% by weight.

### Oil bodies

Suitable oil bodies, which form constituents of the O/W emulsions, are, for example, Guerbet alcohols based on fatty alcohols having 6 to 18, preferably 8 to 10, carbon atoms, esters of linear C₆-C₂₂-fatty acids with linear or branched C₆-C₂₂-fatty alcohols or esters of branched C₆-C ₁₃-carboxylic acids with linear or branched C₆-C ₂₂-fatty alcohols, such as, for example, myristyl myristate, myristyl palmitate, myristyl stearate, myristyl isostearate, myristyl oleate, myristyl behenate, myristyl erucate, cetyl myristate, cetyl palmitate, cetyl stearate, cetyl isostearate, cetyl oleate, cetyl behenate, cetyl erucate, stearyl myristate, stearyl palmitate, stearyl stearate, stearyl isostearate, stearyl oleate, stearyl behenate, stearyl erucate, isostearyl myristate, isostearyl palmitate, isostearyl stearate, isostearyl isostearate, isostearyl oleate, isostearyl behenate, isostearyl oleate, oleyl myristate, oleyl palmitate, oleyl stearate, oleyl isostearate, oleyl oleate, oleyl behenate, oleyl erucate, behenyl myristate, behenyl palmitate, behenyl stearate, behenyl isostearate, behenyl oleate, behenyl behenate, behenyl erucate, erucyl myristate, erucyl palmitate, erucyl stearate, erucyl isostearate, erucyl oleate, erucyl behenate and erucyl erucate. Also suitable are esters of linear C₆-C₂₂-fatty acids with branched alcohols, in particular 2-ethylhexanol, esters of C₁₈-C₃₈- alkylhydroxy carboxylic acids with linear or branched C₆-C ₂₂-fatty alcohols, in particular Dioctyl Malate, esters of linear and/or branched fatty acids with polyhydric alcohols (such as, for example, propylene glycol, dimerdiol or trimertriol) and/or Guerbet alcohols, triglycerides based on C₆ -C₁₀-fatty acids, liquid mono-/di-/triglyceride mixtures based on C₆-C₁₈-fatty acids, esters of C₆- C₂₂-fatty alcohols and/or Guerbet alcohols with aromatic carboxylic acids, in particular benzoic acid, esters of C₂- C₁₂-dicarboxylic acids with linear or branched alcohols having 1 to 22 carbon atoms or polyols having 2 to 10 carbon atoms and 2 to 6 hydroxyl groups, vegetable oils, branched primary alcohols, substituted cyclohexanes, linear and branched C₆-C₂₂-fatty alcohol carbonates, such as, for example, Dicaprylyl Carbonate (Cetiol® CC), Guerbet carbonates, based on fatty alcohols having 6 to 18, preferably 8 to 10, carbon atoms, esters of benzoic acid with linear and/or branched C₆-C₂₂-alcohols (e.g. Finsolv® TN), linear or branched, symmetrical or asymmetrical dialkyl ethers having 6 to 22 carbon atoms per alkyl group, such as, for example, dicaprylyl ether (Cetiol® OE), ring-opening products of epoxidized fatty acid esters with polyols, silicone oils (cyclomethicones, silicone methicone grades, etc.) and/or aliphatic or naphthenic hydrocarbons, such as, for example, squalane, squalene or dialkylcyclohexanes. The amount of oil bodies may be 10 to 30% by weight, and preferably 15 to 30% by weight, calculated on the beads.

### Emulsifiers

Suitable emulsifiers are, in principle, anionic, cationic or amphotheric surfactants. However, preference is given to using non-ionic surfactants, which may be chosen, for example, from at least one of the following groups.
- Addition products of from 2 to 30 mol of ethylene oxide and/or 0 to 5 mol of propylene oxide onto linear fatty alcohols having 8 to 22 carbon atoms, onto fatty acids having 12 to 22 carbon atoms, onto alkyl phenols having 8 to 15 carbon atoms in the alkyl group, and alkyl amines having 8 to 22 carbon atoms in the alkyl radical;
- Alkyl and/or alkenyl oligoglycosides having 8 to 22 carbon atoms in the alk(en)yl radical and ethoxylated analogues thereof;
- Addition products of from 1 to 15 mol of ethylene oxide onto castor oil and/or hydrogenated castor oil;
- Addition products of from 15 to 60 mol of ethylene oxide onto castor oil and/or hydrogenated caster oil;
- Partial esters of glycerol and/or sorbitan with unsaturated, linear or saturated, branched fatty acids having 12 to 22 carbon atoms and/or hydroxy-carboxylic acids having 3 to 18 carbon atoms, and adducts thereof with 1 to 30 mol of ethylene oxide;
- Partial esters of polyglycerol (average degree of self-condensation 2 to 8), polyethylene glycol (molecular weight 400 to 5000), trimethylolpropane, pentaerythritol, sugar alcohols (e.g. sorbitol), alkyl glucosides (e.g. methyl glucoside, butyl glucoside, lauryl glucoside), and polyglucosides (e.g. cellulose) with saturated and/or unsaturated, linear or branched fatty acids having 12 to 22 carbon atoms and/or hydroxycarboxylic acids having 3 to 18 carbon atoms, and adducts thereof with 1 to 30 mol of ethylene oxide;
- Mixed esters of pentaerythritol, fatty acids, citric acid and fatty alcohols and/or mixed esters of fatty acids having 6 to 22 carbon atoms, methylglucose and polyols, preferably glycerol or polyglycerol,
- Mono-, di- and trialkyl phosphates, and mono-, di-and/or tri- PEG alkyl phosphates and salts thereof;
- Wool wax alcohols;
- Polysiloxane-polyalkyl-polyether copolymers and corresponding derivatives;
- Block copolymers, e.g. polyethylene glycol-30 dipolyhydroxystearate;
- Polymer emulsifiers, e.g. Pemulen grades (TR-1, TR-2) from Goodrich;
- Polyalkylene glycols and
- Glycerol carbonate.

In the following, preferred groups of non-ionic emulsifiers are explained in more detail:

### • Alkyleneoxide adducts

The addition products of ethylene oxide and/or of propylene oxide onto fatty alcohols, fatty acids, alkylphenols or onto castor oil are known commercially available products. These are homologue mixtures whose average degree of alkoxylation corresponds to the ratio of the quantitative amounts of ethylene oxide and/or propylene oxide and substrate with which the addition reaction is carried out. C 12/18-fatty acid mono- and diesters of addition products of ethylene oxide onto glycerol are known from German patent DE 2024051 as refatting agents for cosmetic preparations.

### • Alk(en)yl oligoglycosides

Alkyl and/or alkenyl oligoglycosides, their preparation and their use are known from the prior art. They are prepared, in particular, by reacting glucose or oligosaccharides with primary alcohols having 8 to 18 carbon atoms. With regard to the glycoside radical, both monoglycosides, in which a cyclic sugar radical is glycosidically bonded to the fatty alcohol, and also oligomeric glycosides having a degree of oligomerisation of, preferably, up to about 8, are suitable. The degree of oligomerisation here is a statistical average value based on a homologue distribution customary for such technical-grade products.

### • Partial glycerides

Typical examples of suitable partial glycerides are hydroxystearic acid monoglyceride, hydroxystearic acid diglyceride, isostearic acid monoglyceride, isostearic acid diglyceride, oleic acid monoglyceride, oleic acid diglyceride, ricinoleic acid monoglyceride, ricinoleic acid diglyceride, linoleic acid moglyceride, linoleic acid diglyceride, linolenic acid monoglyceride, linolenic acid diglyceride, erucic acid monoglyceride, erucic acid diglyceride, tartaric acid monoglyceride, tartaric acid diglyceride, citric acid monoglyceride, citric diglyceride, malic acid monoglyceride, malic acid diglyceride, and the technical-grade mixtures thereof which may also comprise small amounts of triglyceride as a minor product of the preparation process. Likewise, addition products onto said partial glycerides from 1 to 30 mol of ethylene oxide, preferably 5 to 10 mol, are suitable.

### • Sorbitan esters

Suitable sorbitan esters are sorbitan monoisostearate, sorbitan sesquiisostearate, sorbitan diisostearate, sorbitan triisostearate, sorbitan monooleate, sorbitan sesquioleate, sorbitan dioleate, sorbitan trioleate, sorbitan monoerucate, sorbitan sesquierucate, sorbitan dierucate, sorbitan trierucate, sorbitan monoricinoleate, sorbitan sesquiricinoleate, sorbitan diricinoleate, sorbitan triricinoleate, sorbitan monohydroxystearate, sorbitan sesquihydroxystearate, sorbitan dihydroxystearate, sorbitan trihydroxystearate, sorbitan monotartrate, sorbitan sesquitartrate, sorbitan ditartrate, sorbitan tritartrate, sorbitan monocitrate, sorbitan sesquicitrate, sorbitan dicitrate, sorbitan tricitrate, sorbitan monomaleate, sorbitan sesquimaleate, sorbitan dimaleate, sorbitan trimaleate, and technical-grade mixtures thereof. Likewise, addition products onto said sorbitan esters from 1 to 30 mol of ethylene oxide, preferably 5 to 10 mol, are suitable.

### • Polyglycerol esters

Typical examples of suitable polyglycerol esters are polyglyceryl-2 dipolyhydroxystearate (Dehymuls® PGPH), polyglycerol-3 diisostearate (Lameform® TGI), polyglyceryl-4 isostearate (Isolan® GI 34), polyglyceryl-3 oleate, diisostearoyl polyglyceryl-3 diisostearate (Isolan® PDI), polyglyceryl-3 methylglucose distearate (Tego Care® 450), polyglyceryl-3 beeswax (Cera Bellina®), polyglyceryl-4 caprate (Polyglycerol Caprate T2010/90), polyglyceryl-3 cetyl ether (Chimexane® NL), polyglyceryl-3 distearate (Cremophor® GS 32) and polyglyceryl polyricinoleate (Admul® WOL 1403), polyglyceryl dimerate isostearate, and mixtures thereof. Examples of other suitable polyesters are the mono-, di- and triesters of trimethylolpropane or pentaerythritol with lauric acid, coconut fatty acid, tallow fatty acid, palmitic acid, stearic acid, oleic acid, behenic acid and the like which are optionally reacted with 1 to 30 mol of ethylene oxide.

Emulsifier concentration may be 1 to 10% by weight and preferably 2 to 8% by weight, calculated on the microcapsules.

### Gelling agents

In the context of the invention, preferred gel formers are substances which are capable of forming gels in aqueous solution at temperatures above 40° C. Typical examples of such gel formers are heteropolysaccharides and proteins. Preferred thermogelling heteropolysaccharides are agaroses which may be present in the form of the agar agar obtainable from red algae, even together with up to 30% by weight of non-gel-forming agaropectins. The principal constituent of agaroses are linear polysaccharides of Dalactose and 3,6-anhydro-L-galactose with alternate β-1,3- and β-1,4-glycosidic bonds. The heteropolysaccharides preferably have a molecular weight of 110,000 to 160,000 and are both odourless and tasteless. Suitable alternatives are pectins, xanthans and mixtures thereof. Other preferred types are those which - in 1% by weight aqueous solution - still form gels that do not melt below 80° C and solidify again above 40° C. Examples from the group of thermogelling proteins are the various gelatines.

### Anionic Polymers

Suitable anionic polymers are, in addition to anionic polysaccharides, such as, for example, carboxymethylcellulose, or poly(meth)acrylic acids and derivatives thereof, such as, for example, salts and esters, preferably salts of alginic acid. Alginic acid is a mixture of carboxyl-group-containing polysaccharides having the following idealized monomer building block:

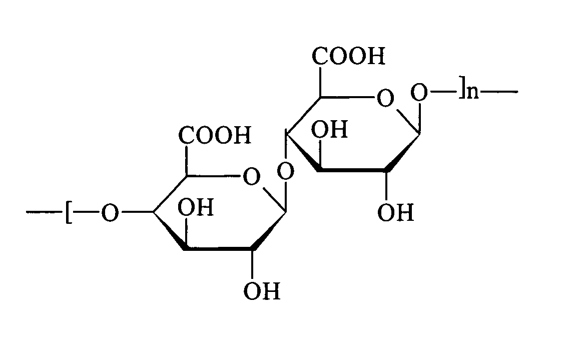

The average molecular weight of the alginic acids or of the alginates is in the range from 150 000 to 250 000. In this connection, the salts of alginic acid mean both their complete and also their partial neutralization products, in particular the alkali metal salts and, of these, preferably sodium alginate ("algin"), and the ammonium and alkaline earth metal salts. Particular preference is given to mixed alginates, such as, for example, sodium/magnesium or sodium/calcium alginates. In an alternative embodiment of the invention, however, xanthan gum, gellan gum or anionic chitosan derivatives are also suitable for this purpose, such as, for example, carboxylation and especially succinylation products, as are described, for example, in German patent specification DE 3713099 C2 (L'Oréal), and the German patent application DE 19604180 A1 (Henkel). The amount of anionic polymers used is usually 0.01 to 1% by weight, preferably 0.05 to 0.1% by weight, calculated on the microcapsules.

### Oligochitosan

Chitosans are biopolymers and belong to the group of hydrocolloids. With the anionic polymers, they form membranes. When considered chemically, they are partially deacetylated chitins of varying molecular weight which contain the following - idealized - monomer building block: 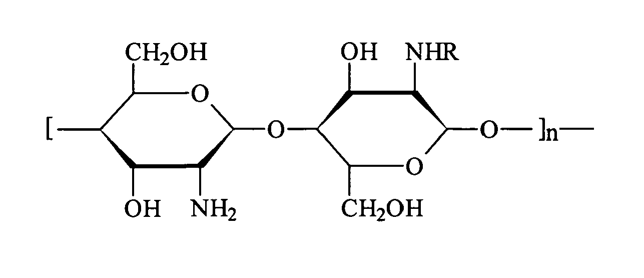 In contrast to most hydrocolloids, which are negatively charged in the range of biological pH values, chitosans are cationic biopolymers under these conditions. The positively charged chitosans can interact with oppositely charged surfaces and are therefore used in cosmetic hair care and body care compositions and also pharmaceutical preparations (**cf.** Ullmann's Encyclopedia of Industrial Chemistry, 5th Ed., Vol. A6, Weinheim, Verlag Chemie, 1986, p. 231-232). Reviews on this topic have also been published, for example, by B. Gesslein et al. in HAPPI 27, 57 (1990), O. Skaugrud in Drug Cosm. Ind. 148, 24 (1991**)** and E. Onsoyen et al. in Seifen-Öle-Fette-Wachse 117, 633 (1991**)**. The chitosans are prepared starting from chitin, preferably the shell remains of crustaceans, which are available as cheap raw materials in large amounts. In this connection, the chitin is usually deproteinated in a process which was described by Hackmann et al. for the first time, by the addition of bases, demineralised by the addition of mineral acids and, finally, deacetylated by the addition of strong bases, which enables the molecular weights to be distributed over a broad spectrum. Corresponding processes are known, for example, from Makromol. Chem. 177, 3589 (1976**)** or the French patent application FR 2701266 A. The chitosans which are used according to the present invention represent strongly degraded types, which are therefore called "oligochitosans", typically having an average molecular weight of less then 5,000, preferably between 250 and 1,000 and more preferably around 500 Dalton.

The use of oligochitosan for the encapsulation as such has been reported, for example, in Colloids and Surfaces B: Biointerfaces 21 (2001), p584-298**;** Chem. Mater. 11 (1999), p2486-2492**,** and Ann. N.Y. Acad. Sci. 875 (1999) 36-45**.** None of these documents, however, discloses visible beads of the inventive type or suggests the combination of oil bodies, anionic polymers and optionally gelling agents on one side and oligochitosan on the other in order to obtain visible beads with improved stability.

The amount of chitosans used is preferably in the range from 0.01 to 1% by weight, preferably 0.05 to 0.1 % by weight, calculated on the microcapsules.

### Preparation of the visible beads

To prepare the visible beads according to the invention, firstly, an O/W emulsion is prepared which, in addition to the oil body, water and the active ingredient, comprises an effective amount of emulsifier and optionally (in order to increase stability of the matrix) a gelling agent. To prepare the matrix, an appropriate amount of an aqueous anionic polymer solution is added to this preparation with vigorous stirring. The membrane is formed by adding the oligochitosan solution. The entire operation preferably takes place in the weakly acidic range at pH=3 to 4. If necessary, the pH is adjusted by adding mineral acid. Following membrane formation, the pH is raised to 5 to 6, for example by adding triethanolamine or another base. This results in a viscosity increase, which can be further aided by adding further thickeners, such as, for example, polysaccharides, in particular xanthan gum, guar guar, agar agar, alginates and tyloses, carboxymethyl cellulose and hydroxyethyl cellulose, higher molecular weight polyethylene glycol mono- and diesters of fatty acids, polyacrylates, polyacrylamides and the like. Subsequently, the microcapsules are separated off from the aqueous phase by, for example, decantation, filtration or centrifugation.

### Industrial Applicability

The invention further relates to the use of the visible beads according to the invention for the preparation of cosmetic, detergent and/or pharmaceutical preparations, such as, for example,
- Hair shampoos, hair lotions, foam baths, shower preparations, creams, (tooth) pastes, gels, lotions, alcoholic and aqueous/alcoholic solutions, emulsions, wax/fatty compositions, stick preparations, powders or ointments and the like, or
- Light duty detergents, heavy duty detergents, liquid or powder detergents, softeners, hard surface cleaners, all-purpose cleaners, toilet bowl cleaners and the like.

These may, in turn, again comprise active ingredients, oil bodies, emulsifiers and additional auxiliary agents which are known from the state of the art in non-encapsulated form, as has already been described at the beginning; another list is therefore not necessary.

The preparations may also be food additives, for example additives for athlete food and the like. The visible beads may be present in these compositions in amounts from 1 to 50% by weight, preferably 5 to 15% by weight.

### Examples

### Example 1

In a stirred apparatus, 0.5 g of preservative (Phenonip®) were dissolved in 50 g of a 4% strength by weight aqueous preparation of sodium alginate (Satialgine® S-20, Degussa AG), and the mixture was adjusted to pH = 3.5. Then, a mixture consisting of 10 g of a 10% strength by weight solution of retinol in soybean oil (Retinol® S10, BASF) and 0.5 g of sorbitan monostearate+20EO (Eumulgin® SMS 20, Cognis Deutschland GmbH & Co. KG) was added with vigorous stirring. To the matrix thus obtained, 10 g glycerol and 6 g talc were added to modify the density of the mixture. The composition was dropped into a bath consisting of a 1 % b.w. aqueous solution of oligochitosan (600 Dalton) using either a pressurized co-axial gas-assisted dropper or a vibrating system (although other dropping methods are also appliable). After maturation of about 2 h, the beads were washed with water and sieved. They were stored with half a volume of 1 % b.w. aqueous sodium chloride solution as preservative. The beads showed an average diameter of 2.5 mm.

### Example 2

In a stirred apparatus, 0.5 g of preservative (Phenonip®) and 2 g of agar agar were dissolved in 50 g of a 4% strength by weight aqueous preparation of sodium alginate (Satialgine® S-20, Degussa AG), and the mixture was adjusted to pH = 3.5. Then, a mixture consisting of 10 g of a 10% strength by weight solution of caffeine in squalane and 0.5 g of sorbitan monostearate+20EO (Eumulgin® SMS 20, Cognis Deutschland GmbH & Co. KG) was added with vigorous stirring. To the matrix thus obtained, 10 g glycerol and 6 g talc were added to modify the density of the mixture. The composition was dropped into a bath consisting of a 1 % b.w. aqueous solution of oligochitosan (600 Dalton) using either pressurized co-axial gas-assisted dropper or a vibrating system. After maturation of about 2 h, the beads were washed with water and sieved. They were stored with half a volume of 1 % b.w. aqueous sodium chloride solution as preservative. The beads showed an average diameter of 3.1 mm.

### Example 3

In a stirred apparatus, 0.5 g of preservative (Phenonip®) were dissolved in 50 g of a 4% strength by weight aqueous preparation of sodium alginate (Satialgine® S-20, Degussa AG), and the mixture was adjusted to pH = 3.5. Then, a mixture consisting of 10 g of a 10% strength by weight solution of tocopherol in mineral oil and 0.5 g of sorbitan monostearate+20EO (Eumulgin® SMS 20, Cognis Deutschland GmbH & Co. KG) was added with vigorous stirring. To the matrix thus obtained, 10 g glycerol and 6 g talc were added to modify the density of the mixture. The composition was dropped into a bath consisting of a 1 % b.w. aqueous solution of oligochitosan (600 Dalton) using either a pressurized co-axial gas-assisted dropper or a vibrating system. After maturation of about 2 h, the beads were washed with water, resuspended in a 5 % aqueous solution of calcium chloride, decanted and sieved. They were stored with half a volume of 1 % b.w. aqueous sodium chloride solution as preservative. The beads showed an average diameter of 2.5 mm.

### Example 4

### Softener composition

55 g of a cationic surfactant (Dehyquart® AU 56, Cognis Iberia S.L.) were heated to 50 °C. The liquid phase thus obtained were diluted with 930 g water (30 °C) and 15 g visible beads according to Example 1 were introduced under vigorous stirring.

In the following table 1 some examples for final compositions are given.

**Table 1 Detergent compositions (% b.w.)**

| | **Manual dish wash** | **Liquid detergent** |
|---|---|---|
| Maranil® DBS | 9.5 | |
| Texapon® PLT 227 | 5.5 | |
| Texapon® N 70 | | 4.5 |
| Demelan® CS-30 | | 20.0 |
| Demelan® LT 7/90 | | 16.5 |
| Glucopon® 600 CSUP | | 4.0 |
| Euperlan® PO | | 1.5 |
| Visible beads, example 1 | 1.β | 1.0 |
| Sodium hydroxide, 50 % | 1.9 | |
| Triethanolamine | 1.2 | |
| Sodium chloride | 0.2 | |
| Colour | 0.1 | |
| Perfume | 0.1 | |
| Water, Preservatives | ad 100 | |

| | | |
|---|---|---|
| All compounds are trade products of Cognis Deutschland GmbH & Co. KG | | |

## Claims

1. Visible beads with average diameters in the range from 0.1 to 5 mm, obtainable by
(a) processing aqueous active ingredient preparations with oil bodies in the presence of emulsifiers and optionally gelling agents to give O/W emulsions,
(b) treating the resulting emulsions with aqueous solutions of anionic polymers,
(c) bringing the resulting matrix into contact with aqueous solutions of oligochitosan having an average molecular weight of less than 5,000 Dalton, and
(d) separating off the resulting encapsulation products from the aqueous phase.

2. A process for the preparation of visible beads with average diameters in the range from 0.1 to 5 mm in which
(a) aqueous active ingredient preparations are processed with oil bodies in the presence of emulsifiers and optionally gelling agents to give O/W emulsions,
(b) the resulting emulsions are treated with aqueous solutions of anionic polymers,
(c) the resulting matrix is brought into contact with aqueous solutions of oligochitosan having an average molecular weight of less than 5,000 Dalton and
(d) resulting encapsulation products are separated off from the aqueous phase.

3. The process as claimed in claim 2, **characterised in that** active ingredients are used which are selected from the group consisting of fats and waxes, pearlescent waxes, lecithins, phospholipids, biogenic active ingredients, UV light protection factors, antioxidants, deodorants, antiperspirants, antidandruff agents, film formers, insect repellents, self-tanning agents, tyrosine inhibitors, perfume oils and dyes.

4. The process as claimed in claims 2 and/or 3, **characterised in that** oil bodies are used which are selected from the group consisting of Guerbet alcohols based on fatty alcohols having 6 to 18 carbon atoms; esters of linear C₆-C₂₂-fatty acids with linear or branched C₆-C₂₂-fatty alcohols; esters of branched C₆-C₁₃-carboxylic acids with linear or branched C₆-C₂₂-fatty alcohols; esters of linear C₆-C₂₂-fatty acids with branched alcohols; esters of C₁₈-C₃₈-alkylhydroxycarboxylic acids with linear or branched C₆-C₂₂₋fatty alcohols; esters of linear and/or branched fatty acids with polyhydric alcohols and/or Guerbet alcohols; triglycerides based on C₆-C₁₀-fatty acids; liquid mono-/di-/triglyceride mixtures based on C₆-C ₁₈-fatty acids; esters of C₆-C₂₂-fatty alcohols and/or Guerbet alcohols with aromatic carboxylic acids; esters of C₂-C₁₂-dicarboxylic acids with linear or branched alcohols having 1 to 22 carbon atoms or polyols having 2 to 10 carbon atoms and 2 to 6 hydroxyl groups; vegetable oils; branched primary alcohols; substituted cyclohexanes; linear and branched C₆- C₂₂-fatty alcohol carbonates; Guerbet carbonates based on fatty alcohols having 6 to 18 carbon atoms; esters of benzoic acid with linear and/or branched C₆-C₂₂-alcohols; linear or branched, symmetrical or asymmetrical dialkyl ethers having 6 to 22 carbon atoms per alkyl group; ring-opening products of epoxidized fatty acid esters with polyols; silicone oils, and aliphatic or naphthenic hydrocarbons and mineral oils.

5. The process as claimed in at least one of claims 2 to 4, **characterised in that** non-ionic emulsifiers are used.

6. The process as claimed in at least one of claims 2 to 5, **characterised in that** non-ionic emulsifiers are used which are selected from the group consisting of addition products of from 2 to 30 mol of ethylene oxide and/or 0 to 5 mol of propylene oxide onto linear fatty alcohols having 8 to 22 carbon atoms, onto fatty acids having 12 to 22 carbon atoms, onto alkylphenols having 8 to 15 carbon atoms in the alkyl group, and alkylamines having 8 to 22 carbon atoms in the alkyl radical; alkyl and/or alkenyl oligoglycosides having 8 to 22 carbon atoms in the alk(en) yl radical and ethoxylated analogs thereof; addition products of from 1 to 15 mol of ethylene oxide onto castor oil and/or hydrogenated castor oil; addition products of from 15 to 60 mol of ethylene oxide onto castor oil and/or hydrogenated castor oil; partial esters of glycerol and/or sorbitan with unsaturated, linear or saturated, branched fatty acids having 12 to 22 carbon atoms and/or hydroxycarboxylic acids having 3 to 18 carbon atoms, and adducts thereof with 1 to 30 mol of ethylene oxide; partial esters of polyglycerol polyethylene glycol, trimethylolpropane, pentaerythritol, sugar alcohols alkyl glucosides, and polyglucosides with saturated and/or unsaturated, linear or branched fatty acids having 12 to 22 carbon atoms and/or hydroxycarboxylic acids having 3 to 18 carbon atoms, and adducts thereof with 1 to 30 mol of ethylene oxide; mixed esters of pentaerythritol, fatty acids, citric acid and fatty alcohol and/or mixed esters of fatty acids having 6 to 22 carbon atoms, methylglucose and polyols; mono-, di- and trialkyl phosphates, and mono-, di- and/or tri-PEG alkyl phosphates and salts thereof; wool wax alcohols; polysiloxane-polyalkyl-polyether copolymers; block copolymers; polyalkylene glycols, and glycerol carbonate.

7. The process as claimed in at least one of claims 2 to 6, **characterised in that** anionic polymers are used which are selected from the group consisting of anionic polysaccharides, poly(meth)acrylic acids and derivatives thereof, and alginic acid and salts thereof.

8. The process as claimed in at least one of claims 2 to 7, **characterised in that** oligochitosans are used which have an average molecular weight in the range from 250 to 1,000 Dalton.

9. The process as claimed in at least one of claims 2 to 8, **characterised in that** the beads thus obtained are hardened by treatment with aqueous solutions of Calcium salts.

10. The use of visible beads as claimed in claim 1 for the preparation of cosmetic, detergent and/or pharmaceutical compositions or food preparations.
